# EUROPEAN PATENT APPLICATION

(11) **EP 4 510 731 A1**
(43) Date of publication of application: **19.02.2025**
(21) Application number: 22936919.4
(22) Date of filing: 14.04.2022
(51) Int. Cl.: H04W 72/04

(54) **RESOURCE CONFIGURATION METHOD AND APPARATUS THEREFOR**

(71) Applicant: Beijing Xiaomi Mobile Software Co., Ltd., Beijing 100085 (CN)
(72) Inventor: ZHAO, Wensu, Beijing 100085 (CN); ZHAO, Qun, Beijing 100085 (CN)
(74) Representative: Stöckeler, Ferdinand
(86) International application number: PCT/CN2022/086927
(87) International publication number: WO 2023/197271

(57) **Abstract**

Disclosed in the embodiments of the present application are a resource configuration method and an apparatus therefor, which can be applied to Internet-of-Vehicles systems, such as V2X and V2V. The method comprises: a network device determining the magnitude of resource granularity (201); and according to the magnitude of resource granularity and a mapping rule of sub-channels and interlaced resource block indexes, determining configuration information of at least one sub-channel (202), wherein the configuration information of each sub-channel indicates the number and positions of interlaced resource block indexes configured corresponding to the sub-channel; and two consecutive interlaced resource blocks in the same interlaced resource block index have an interval of M resource blocks, and M is determined by the magnitude of a sub-carrier spacing. By means of implementing the embodiments of the present application, an OCB requirement can be met on a terminal sidelink-unlicensed frequency band, such that future potential diversified application scenarios and requirements can be satisfied.

## Description

### FIELD

The present invention relates to the field of communication technology, and more particularly to a method and apparatus for configuring resources.

### BACKGROUND

In the Internet of Vehicles, terminal devices communicate with each other via a sidelink (SL). The sidelink includes a physical sidelink control channel (PSCCH) and a physical sidelink share channel (PSSCH). Sidelink control information (SCI) in the PSCCH can indicate information required to receive the PSSCH, such as PSSCH channel resources and transmission parameters. The PSSCH is used to carry data for sidelink communication. With the continued emergence of new services and new demands for various applications, the sidelink communication between terminal devices has higher and higher requirements on various performances such as transmission width, communication speed domain, communication delay, reliability, and expandability. If one only relies limited frequency bands licensed by operators, diversified application scenarios and requirements in the future cannot be met, making it necessary to study the terminal sidelink technology that can be applied on an unlicensed frequency band (SL-U technology for short).

On the unlicensed frequency band, it is necessary to meet an OCB (occupied channel bandwidth, for sending signals on the unlicensed spectrum) requirement, that is, each transmission needs to occupy 80% of a bandwidth of each listen before talk (LBT) sub-band (such as 20 MHz).

However, at present, in an SL-U system, there is no effective resource configuring method for sub-channels with an interlaced resource block as the granularity.

### SUMMARY

Embodiments of the present invention provide a method and apparatus for configuring resources, which may be applied to Internet of Vehicles, such as vehicle to everything (V2X) communication, long term evolution-vehicle (LTE-V), vehicle to vehicle (V2V) communication, etc., or may be applied in fields such as intelligent driving, intelligent connected vehicles, etc.. By designing a mapping manner between sub-channels and interlaced resource block (IRB) indexes to realize configuration of sub-channels, OCB requirements are met on an unlicensed frequency band of a terminal sidelink, thereby satisfying potential diversified application scenarios and requirements in the future.

In a first aspect, embodiments of the present invention provide a method for configuring resources, which is performed by a network device, and includes: determining a size of a resource granularity; and determining configuration information of at least one sub-channel according to the size of the resource granularity and a mapping rule between sub-channels and interlaced resource block indexes. Configuration information of each of the at least one sub-channel indicates the number and positions of interlaced resource block indexes configured for the corresponding sub-channel; and the number of resource blocks between two consecutive interlaced resource blocks included in the same interlaced resource block index is *M*, and *M* is determined by a size of a subcarrier spacing.

In this technical solution, the interlaced resource blocks are divided into sub-channels to form configuration information of the sub-channels, where the configuration information indicates the number and positions of interlaced resource block indexes configured for the respective sub-channels. It can be seen that the present invention provides a mapping manner between sub-channels and interlaced resource block indexes to realize the configuration of sub-channels, which can meet the OCB requirements on the unlicensed frequency band of the terminal sidelink, thereby satisfying potential diversified application scenarios and requirements in the future.

In an embodiment, determining the configuration information of the at least one sub-channel according to the size of the resource granularity and the mapping rule between sub-channels and interlaced resource block indexes includes: determining the number of interlaced resource block indexes included in each sub-channel according to the size of the resource granularity; and determining positions of the interlaced resource block indexes mapped for each sub-channel according to the mapping rule between sub-channels and interlaced resource block indexes.

In an embodiment, determining the size of the resource granularity includes: determining the size of the resource granularity according to the number of interlaced resource block indexes included in a sub-channel; or determining the size of the resource granularity according to the number of sub-channels included in a listen-before-talk (LBT) sub-band.

In an embodiment, the mapping rule between sub-channels and interlaced resource block indexes is that starting from a first interlaced resource block index in an LBT sub-band, and in a sequence of serial numbers of interlaced resource block indexes in the LBT sub-band from small to large, one or more interlaced resource blocks are mapped to a sub-channel.

In an embodiment, the mapping rule between sub-channels and interlaced resource block indexes is that the sub-channel includes *m1* interlaced resource block indexes, and the sub-channel is mapped to *m1* consecutive interlaced resource block indexes. The number of interlaced resource block indexes included in the LBT sub-band is *m1* times the number of sub-channels included in the LBT sub-band, and *m1* is a positive integer greater than 1 and less than or equal to *M.*

In an embodiment, the mapping rule between sub-channels and interlaced resource block indexes is that the sub-channel includes *m1* interlaced resource block indexes, and the sub-channel is mapped to *m1* non-consecutive interlaced resource block indexes. The number of interlaced resource block indexes included in the LBT sub-band is *m1* times the number of sub-channels included in the LBT sub-band, and *m1* is a positive integer greater than 1 and less than *M.*

Optionally, the sub-channel being mapped to *m1* non-consecutive interlaced resource block indexes includes: the sub-channel being mapped to *m1* interlaced resource block indexes with odd serial numbers; the sub-channel being mapped to *m1* interlaced resource block indexes with even serial numbers; or the sub-channel being mapped to *m1* interlaced resource block indexes, where a difference between serial numbers of adjacent interlaced resource block indexes in the *m1* interlaced resource block indexes is *x1*, *x1* is the number of sub-channels included in the LBT sub-band, and *x1* is an integer less than *M*.

In a possible embodiment, the mapping rule between sub-channels and interlaced resource block indexes is that the sub-channel includes *a+1* interlaced resource block indexes, and the sub-channel is mapped to all resource blocks included in *a* consecutive or non-consecutive interlaced resource block indexes and mapped to a part of interlaced resource blocks included in a remaining interlaced resource block index of the *a+1* interlaced resource block indexes. The number of interlaced resource block indexes included in the LBT sub-band is *m2* times the number of sub-channels included in the LBT sub-band, where *m2* is a non-integer greater than 1 and less than *M*, and *a* is a value obtained by rounding down *m2.*

In a possible embodiment, the mapping rule between sub-channels and interlaced resource block indexes is that the sub-channel includes *a*+*1* interlaced resource block indexes, the sub-channel is mapped to all resource blocks included in *a* consecutive or non-consecutive interlaced resource block indexes, and a remaining interlaced resource block index of the *a+1* interlaced resource block indexes is not mapped to the sub-channel. The number of interlaced resource block indexes included in the LBT sub-band is *m2* times the number of sub-channels included in the LBT sub-band, where *m2* is a non-integer greater than 1 and less than *M,* and *a* is a value obtained by rounding down *m2.*

In a possible embodiment, the mapping rule between sub-channels and interlaced resource block indexes is that remaining interlaced resource blocks in the LBT sub-band that cannot form a complete sub-channel are combined with remaining interlaced resource blocks in other LBT sub-bands to form a complete sub-channel.

Optionally, the remaining interlaced resource blocks in the LBT sub-band that cannot form a complete sub-channel being combined with the remaining interlaced resource blocks in other LBT sub-bands to form a complete sub-channel includes: the remaining interlaced resource blocks in the LBT sub-band that cannot form a complete sub-channel being combined with interlaced resource blocks in an adjacent LBT sub-band to form a complete sub-channel; or respective remaining interlaced resource blocks in a plurality of LBT sub-bands being combined to form a complete sub-channel, where each of the plurality of LBT sub-bands includes at least one complete sub-channel.

In a second aspect, embodiments of the present invention provide another method for configuring resources, which is performed by a terminal device, and includes: receiving configuration information of a sub-channel sent by a network device. The configuration information of the sub-channel indicates the number and positions of interlaced resource block indexes configured for the corresponding sub-channel; and the number of resource blocks between two consecutive interlaced resource blocks included in the same interlaced resource block index is *M,* and *M* is determined by a size of a subcarrier spacing.

In this technical solution, with the mapping manner between sub-channels and interlaced resource block indexes, the sub-channels are configured, which can meet the OCB requirements on the unlicensed frequency band of the terminal sidelink, thereby satisfying potential diversified application scenarios and requirements in the future.

In a third aspect, embodiments of the present invention provide a communication apparatus, which has some or all of functions of the terminal device for implementing the method as described in the first aspect above. For example, the communication apparatus may have functions as described in some or all the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In an embodiment, the communication apparatus may include: a transceiving module and a processing module in structure. The processing module is configured to support the communication apparatus to perform corresponding functions in the above method. The transceiving module is configured to support the communication apparatus to communicate with other devices. The communication apparatus may further include a storage module, which is configured to couple with the transceiving module and the processing module, and store computer programs and data necessary for the communication apparatus.

As an example, the processing module may be a processor, the transceiving module may be a transceiver or a communication interface, and the storage module may be a memory.

In an embodiment, the processing module is configured to: determine a size of a resource granularity; and determine configuration information of at least one sub-channel according to the size of the resource granularity and a mapping rule between sub-channels and interlaced resource block indexes. Configuration information of each of the at least one sub-channel indicates the number and positions of interlaced resource block indexes configured for the corresponding sub-channel; and the number of resource blocks between two consecutive interlaced resource blocks included in the same interlaced resource block index is *M*, and *M* is determined by a size of a subcarrier spacing.

In a possible embodiment, the processing module includes: a determining unit, configured to determine the number of interlaced resource block indexes included in each sub-channel according to the size of the resource granularity; and a mapping unit, configured to determine positions of the interlaced resource block indexes mapped for each sub-channel according to the mapping rule between sub-channels and interlaced resource block indexes.

In a possible embodiment, the processing module is specifically configured to: determine the size of the resource granularity according to the number of interlaced resource block indexes included in a sub-channel; or determine the size of the resource granularity according to the number of sub-channels included in a listen-before-talk (LBT) sub-band.

In a possible embodiment, the mapping unit is specifically configured to: starting from a first interlaced resource block index in an LBT sub-band, and in a sequence of serial numbers of interlaced resource block indexes in the LBT sub-band from small to large, map one or more interlaced resource blocks to a sub-channel.

In a possible embodiment, the mapping unit is specifically configured to: map the sub-channel to *m1* consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than or equal to *M.*

In a possible embodiment, the mapping unit is specifically configured to: map the sub-channel to *m1* non-consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than *M*.

In a possible embodiment, the mapping unit is specifically configured to: map the sub-channel to *m1* interlaced resource block indexes with odd serial numbers; map the sub-channel to *m1* interlaced resource block indexes with even serial numbers; or map the sub-channel b to *m1* interlaced resource block indexes, where a difference between serial numbers of adjacent interlaced resource block indexes in the *m1* interlaced resource block indexes is *x1*, *x1* is the number of sub-channels included in the LBT sub-band, and *x1* is an integer less than *M*.

In a possible embodiment, the sub-channel includes *a+1* interlaced resource block indexes, and the mapping unit is specifically configured to: map the sub-channel to all resource blocks included in *a* consecutive or non-consecutive interlaced resource block indexes and to a part of interlaced resource blocks included in a remaining interlaced resource block index of the *a+1* interlaced resource block indexes. The number of interlaced resource block indexes included in the LBT sub-band is *m2* times the number of sub-channels included in the LBT sub-band, where *m2* is a non-integer greater than 1 and less than *M,* and *a* is a value obtained by rounding down *m2.*

In a possible embodiment, the sub-channel includes *a+1* interlaced resource block indexes, and the mapping unit is specifically configured to: map the sub-channel to all resource blocks included in *a* consecutive or non-consecutive interlaced resource block indexes, and not map a remaining interlaced resource block index of the *a+1* interlaced resource block indexes to the sub-channel. The number of interlaced resource block indexes included in the LBT sub-band is *m2* times the number of sub-channels included in the LBT sub-band, where *m2* is a non-integer greater than 1 and less than *M*, and *a* is a value obtained by rounding down *m2.*

In a possible embodiment, the mapping unit is specifically configured to: combine remaining interlaced resource blocks in the LBT sub-band that cannot form a complete sub-channel with remaining interlaced resource blocks in other LBT sub-bands to form a complete sub-channel.

In a possible embodiment, the mapping unit is specifically configured to: combine the remaining interlaced resource blocks in the LBT sub-band that cannot form a complete sub-channel with interlaced resource blocks in an adjacent LBT sub-band to form a complete sub-channel; or combine respective remaining interlaced resource blocks in a plurality of LBT sub-bands to form a complete sub-channel, where each of the plurality of LBT sub-bands includes at least one complete sub-channel.

In a fourth aspect, embodiments of the present invention provide another communication apparatus, which has some or all of functions of the network device for implementing the method as described in the second aspect above. For example, the communication apparatus may have functions as described in some or all the embodiments in the present invention, or may also have functions to separately implement any of embodiments in the present invention. The functions may be implemented by hardware, or may be implemented by software executed on corresponding hardware. The hardware or the software includes one or more units or modules corresponding to the above functions.

In an embodiment, the communication apparatus may include: a transceiving module and a processing module in structure. The processing module is configured to support the communication apparatus to perform corresponding functions in the above method. The transceiving module is configured to support the communication apparatus to communicate with other devices. The communication apparatus may further include a storage module, which is configured to couple with the transceiving module and the processing module, and store computer programs and data necessary for the communication apparatus.

As an example, the processing module may be a processor, the transceiving module may be a transceiver or a communication interface, and the storage module may be a memory.

In a possible embodiment, the transceiving module is configured to receive configuration information of a sub-channel sent by a network device. The configuration information of the sub-channel indicates the number and positions of interlaced resource block indexes configured for the corresponding sub-channel; and the number of resource blocks between two consecutive interlaced resource blocks comprised in the same interlaced resource block index is *M,* and *M* is determined by a size of a subcarrier spacing.

In a fifth aspect, embodiments of the present application provide a communication apparatus. The communication apparatus includes a processor, and the processor is configured to perform the method described in the first aspect when calling computer programs in a memory.

In a sixth aspect, embodiments of the present application provide a communication apparatus. The communication apparatus includes a processor, and the processor is configured to perform the method described in the second aspect when calling computer programs in a memory.

In a seventh aspect, embodiments of the present application provide a communication apparatus. The communication apparatus includes a processor and a memory having stored therein computer programs; and the processor is configured to execute the computer programs stored in the memory to cause the communication apparatus to perform the method described in the first aspect above.

In an eighth aspect, embodiments of the present application provide a communication apparatus. The communication apparatus includes a processor and a memory having stored therein computer programs; and the processor is configured to execute the computer programs stored in the memory to cause the communication apparatus to perform the method described in the second aspect above.

In a ninth aspect, embodiments of the present application provide a communication apparatus. The apparatus includes a processor and an interface circuit. The interface circuit is configured to receive code instructions and transmit the code instructions to the processor. The processor is configured to run the code instructions to cause the apparatus to perform the method described in the first aspect.

In a tenth aspect, embodiments of the present application provide a communication apparatus. The apparatus includes a processor and an interface circuit. The interface circuit is configured to receive code instructions and transmit the code instructions to the processor. The processor is configured to run the code instructions to cause the apparatus to perform the method described in the first aspect.

In an eleventh aspect, embodiments of the present application provide a system for configuring resources. The system includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect, or the system includes the communication apparatus described in the ninth aspect and the communication apparatus described in the tenth aspect.

In a twelfth aspect, embodiments of the present invention provide a computer-readable storage medium for storing instructions to be used by the above terminal device, and the instructions, when executed, cause the terminal device to perform the method described in the first aspect.

In a thirteenth aspect, embodiments of the present invention provide a readable storage medium for storing instructions to be used by the above network device, and the instructions, when executed, cause the network device to perform the method described in the second aspect.

In a fourteenth aspect, the present invention further provides a computer program product, which includes computer programs that, when run on a computer, cause the computer to perform the method described in the first aspect above.

In a fifth aspect, the present invention further provides a computer program product, which includes computer programs that, when run on a computer, cause the computer to perform the method described in the second aspect above.

In a sixteenth aspect, the present invention provides a chip system, which includes at least one processor and an interface, for supporting a terminal device to implement functions involved in the first aspect, for example, to determine or process at least one of data and information involved in the above method. In a possible design, the chip system further includes a memory for storing computer programs and data necessary for the terminal. The chip system may consist of chips, or may include chips and other discrete devices.

In a seventeenth aspect, the present invention provides a chip system, which includes at least one processor and an interface, for supporting a network device to implement functions involved in the second aspect, for example, to determine or process at least one of data and information involved in the above method. In a possible design, the chip system further includes a memory for storing computer programs and data necessary for the network device. The chip system may consist of chips, or may include chips and other discrete devices.

In an eighteenth aspect, the present invention provides a computer program that, when run on a computer, causes the computer to perform the method described in the first aspect above.

In a nineteenth aspect, the present invention provides a computer program that, when run on a computer, causes the computer to perform the method described in the second aspect above.

### BRIEF DESCRIPTION OF THE DRAWINGS

In order to clearly illustrate the technical solutions in embodiments of the present invention or in the related art, drawings to be used for the description of embodiments of the present invention or the related art are described below.
FIG. 1 is a schematic architectural diagram of a communication system according to embodiments of the present invention;
FIG. 2 is a schematic flowchart of a method for configuring resources according to embodiments of the present invention;
FIG. 3 is a first schematic diagram of interlaced resource blocks according to embodiments of the present invention;
FIG. 4 is a second schematic diagram of interlaced resource blocks according to embodiments of the present invention;
FIG. 5 is a first schematic diagram of mapping sub-channels to interlaced resource block indexes according to embodiments of the present invention;
FIG. 6 is a second schematic diagram of mapping sub-channels to interlaced resource block indexes according to embodiments of the present invention;
FIG. 7 is a third schematic diagram of mapping sub-channels to interlaced resource block indexes according to embodiments of the present invention;
FIG. 8 is a fourth schematic diagram of mapping sub-channels to interlaced resource block indexes according to embodiments of the present invention;
FIG. 9 is a schematic flowchart of another method for configuring resources according to embodiments of the present invention;
FIG. 10 is a schematic block diagram of an apparatus for configuring resources according to embodiments of the present invention; and
FIG. 11 is a schematic block diagram of another apparatus for configuring resources according to embodiments of the present invention.

### DETAILED DESCRIPTION

Reference will now be made in detail to illustrative embodiments, examples of which are illustrated in the accompanying drawings. Throughout the specification, the same or similar reference numerals represent the same or similar elements or elements with the same or similar functions. The embodiments described below with reference to the accompanying drawings are illustrative and are intended to explain the present invention, but should not be construed as limiting the present invention. In the description of the present application, unless otherwise stated, the character "/" indicates an "or" relationship, for example, A/B can mean A or B; the term "and/or" used herein describes an association relationship of associated objects, indicating that three relationships may exist, for example, the expression "A and/or B" may include the following three cases: A alone, B alone, and both A and B.

At present, with the continued emergence of new services and new demands for various applications, a terminal sidelink (SL) will have higher and higher requirements on various performances such as transmission width, communication speed domain, communication delay, reliability, and expandability. If one only relies limited frequency bands licensed by operators, diversified application scenarios and requirements in the future cannot be met, making it necessary to study the terminal sidelink technology that can be applied on an unlicensed frequency band (SL-U technology for short).

On the unlicensed frequency band, it is necessary to meet an OCB (occupied channel bandwidth, for sending signals on the unlicensed spectrum) requirement, that is, each transmission needs to occupy 80% of a bandwidth of each listen before talk (LBT) sub-band (such as 20 MHz). In the related art, in an SL-U system, a sub-channel is used as a resource allocation granularity, the sub-channel includes consecutive resource blocks (RBs), and sub-channels are configured according to a mapping rule between sub-channels and resource blocks (RBs). However, in order to provide a sufficiently flexible resource indication effect, this configuration scheme usually uses a large overhead to indicate the configured frequency domain resources. Therefore, in the SL-U system, there is currently no effective resource configuring method for sub-channels with an interlaced resource block as the granularity.

To this end, the present invention proposes a method and apparatus for configuring resources, which may be applied to the SL-U system. By providing a mapping manner between sub-channels and interlaced resource block indexes, resource configuration of sub-channels is achieved, and the OCB requirements can be met on the unlicensed frequency band of the terminal sidelink, thereby satisfying potential diversified application scenarios and requirements in the future.

In order to better understand the method and apparatus for configuring resources according to embodiments of the present invention, the communication system used in embodiments of the present invention will be described first below.

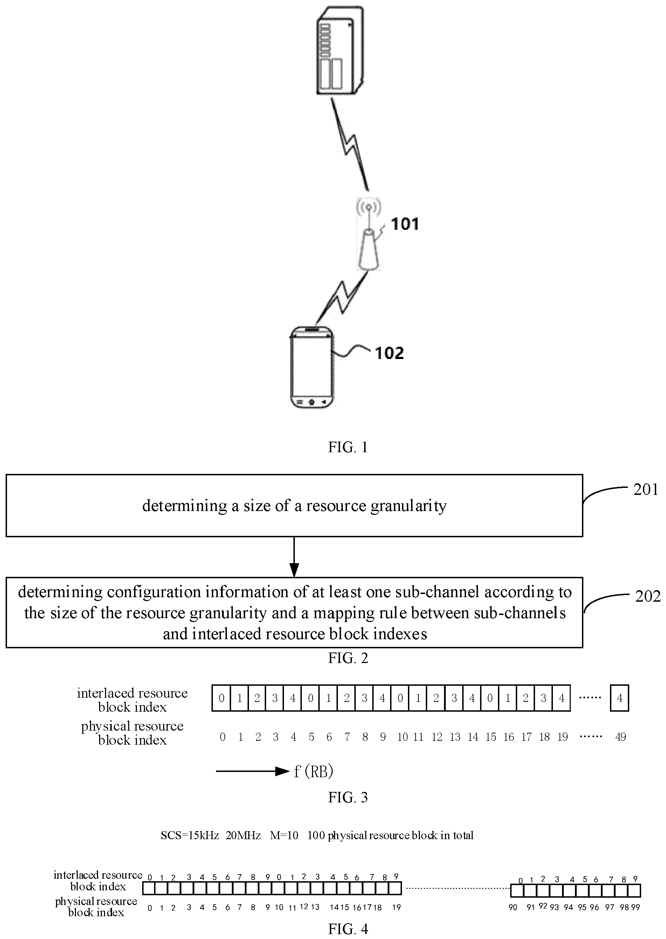

Referring to FIG. 1, FIG. 1 is a schematic architecture diagram of a communication system according to embodiments of the present invention. The communication system may include, but not limited to, a network device and a terminal device. The number and forms of the devices shown in FIG. 1 are only used as an example and do not constitute a limitation on embodiments of the present invention. The communication system may include two or more network devices and two or more terminal devices in practical applications. As an example for illustration, the communication system shown in FIG. 1 includes one network device and one terminal device.

It should be noted that the technical solutions of embodiments of the present invention may be applied to various communication systems, for example, a long term evolution (LTE) system, a 5th generation (5G) mobile communication system, a 5G new radio (NR) system, an SL-U system, or other new mobile communication systems in the future.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device in embodiments of the present invention is an entity at a user side for receiving or sending signals, such as a mobile phone. A first terminal device and a second terminal device may also be called terminals, UEs, mobile stations (MSs), mobile terminals (MTs), and so on. The terminal device may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present invention do not limit the specific technique and the specific device form adopted by the terminal device.

It can be understood that the communication system described in embodiments of the present invention is intended to illustrate the technical solutions of embodiments of the present invention more clearly, and does not constitute a limitation on the technical solutions according to embodiments of the present invention. Those of ordinary skill in the art will know that with the evolution of the system architecture and the emergence of new service scenarios, the technical solutions according to embodiments of the present invention are also applicable to similar technical problems.

The method and apparatus for configuring resources according to the present invention will be described in detail below with reference to the accompanying drawings.

Referring to FIG. 2, FIG. 2 is a schematic flowchart of a method for configuring resources according to embodiments of the present invention. It should be noted that the method for configuring resources in embodiments of the present invention may be applied to an SL-U system, and the method may be performed by a network device. As shown in FIG. 2, the method for configuring resources may include, but not limited to, the following steps.

In step 201, a size of a resource granularity is determined.

In step 202, configuration information of at least one sub-channel is determined according to the size of the resource granularity and a mapping rule between sub-channels and interlaced resource block indexes.

In embodiments of the present invention, configuration information of each of the at least one sub-channel indicates the number and positions of interlaced resource block indexes configured for the corresponding sub-channel; and the number of resource blocks between two consecutive interlaced resource blocks included in the same interlaced resource block index is M, and *M* is determined by a size of a subcarrier spacing.

It should be noted that in the NR-U system, interlaced resource blocks (IRBs) are introduced, that is, two consecutive interlaced resource blocks are spaced by *M* resource blocks. For an interlaced resource block index *m*, physical resource blocks (PRBs) included in the interlaced resource block index *m* are {*m, M+m, 2M+m, 3M+m, ...* }, where m ∈ {0, 1, ..., M-1}. In the NR-U system, IRB structures are defined for a subcarrier spacing of 15 kHz and a subcarrier spacing of 30 kHz, respectively, as shown in the following table.

**Table 4.4.4.6-1: Number of resource blocks interlaced**

| *µ* | *M* |
|---|---|
| 0 | 10 |
| 1 | 5 |

For example, as shown in FIG. 3, when the subcarrier spacing (SCS) = 30 kHz, and *M*=5, there are 5 interlaced resource block indexes in total. For one interlaced resource block index, such as the interlaced resource block index 0, interlaced resource blocks included in the interlaced resource block index are PRBs {0,5,10,15,20,25,30,35,40,45}. As another example, as shown in FIG. 4, when the subcarrier spacing (SCS) = 15 kHz and *M*=10, there are 10 interlaced resource block indexes with a total of 100 PRBs. For one interlaced resource block index, such as the interlaced resource block index 0, interlaced resource blocks included in the interlaced resource block index are PRBs {0,10,20,30,40,50,60,70,80,90}. The present invention continues to introduce interlaced resource blocks. Therefore, by introducing the interlaced resource blocks, the overhead for indicating configured frequency domain resources can be reduced in the SL-U system.

In embodiments of the present invention, when configuring sub-channels, the network device can map the interlaced resource blocks in the system to one or more sub-channels. That is, the interlaced resource blocks in the system may be divided into one or more sub-channels to form sub-channel configuration of the system. The sub-channel configuration may include configuration information of each configured sub-channel. The configuration information of each configured sub-channel indicates the number and positions of interlaced resource block indexes configured for the corresponding sub-channel, thereby achieving the configuration of the sub-channels. Optionally, each sub-channel may correspond to a unique sub-channel index, and the sub-channel index indicates use of the interlaced resource blocks included in the corresponding sub-channel to carry control information and/or data information of a terminal device.

By implementing embodiments of the present invention, one or more interlaced resource block indexes are divided into one or more sub-channels to form the configuration information of each sub-channel, where the configuration information of each sub-channel indicates the number and positions of interlaced resource block indexes configured for the corresponding sub-channel. It can be seen that the present invention provides a mapping manner between sub-channels and interlaced resource block indexes to realize resource configuration of sub-channels, which can solve the problem of large overhead for indicating the configured frequency domain resources in the system and reduce the number of instructions, and reduce the overhead for indicating the configured frequency domain resources, and at the same time, the OCB requirements can be met on the unlicensed frequency band of the terminal sidelink, thereby meeting potential diversified application scenarios and needs in the future.

In some embodiments of the present invention, the number of interlaced resource block indexes included in each sub-channel may be determined according to the size of the resource granularity; and positions of the interlaced resource block indexes mapped for each sub-channel may be determined according to the mapping rule between sub-channels and interlaced resource block indexes.

Optionally, the size of the resource granularity may be understood as a granularity relationship between sub-channels and interlaced resource block indexes. The present invention defines the granularity relationship between sub-channels and interlaced resource block indexes. Based on this granularity relationship, the number of interlaced resource block indexes included in one sub-channel is determined, and further based on the mapping rule between sub-channels and interlaced resource block indexes, positions of the interlaced resource block indexes mapped to the one sub-channel are determined, so that based on the granularity relationship and the mapping rule, the configuration information of the sub-channel configured by network device is determined.

In some embodiments of the present invention, the size of the resource granularity may be determined according to the number of interlaced resource block indexes included in a sub-channel; or the size of the resource granularity may be determined according to the number of sub-channels included in a listen-before-talk (LBT) sub-band.

In an implementation, a size of one sub-channel, i.e., the size of the resource granularity, may be determined according to the number *n* of interlaced resource block indexes included in one sub-channel. The number *n* may be understood as that one sub-channel includes *n* interlaced resource block indexes. As an example, the *n* interlaced resource block indexes may be consecutive, or the *n* interlaced resource block indexes may be non-consecutive. The number *n* may be predefined; or the number *n* may be preconfigured; or the number *n* may be determined in other ways, which will not be elaborated here.

In another implementation, a size of one sub-channel, i.e., the size of the resource granularity, may be determined according to the number of sub-channels included in one sub-band. As an example, the number *m* of sub-channels included in one sub-band may be determined in a predefined or preconfigured manner. Then, the number of interlaced resource block indexes included in one sub-channel is *M*/*m*, and *M*/*m* may be an integer or a non-integer, where *M* is the number of interlaced resource block indexes included in one sub-band.

Optionally, the above number *m* may be a set of values preconfigured by the network device (such as a base station), such as *m*={1,2,5,10}, and the network device (such as the base station) indicates which value to select via a downlink signaling. For example, the subcarrier spacing (SCS) is 15 kHz, the LBT bandwidth is 20 Mhz, and M=10 indicates the number of interlaced resource block indexes included in one LBT sub-band, if one LBT sub-band includes two sub-channels, one sub-channel includes 5 interlaced resource block indices.

That is, the number of interlaced resource block indexes included in each sub-channel may be determined according to the size of the resource granularity, and the positions of the interlaced resource block indexes mapped for each sub-channel may be determined according to the mapping rule between sub-channels and interlaced resource block indexes, so that the configuration information of each sub-channel can be determined, and the configuration information indicates the number and positions of the interlaced resource block indexes configured for the corresponding sub-channel.

It should be noted that in embodiments of the present invention, one sub-channel may be mapped to one LBT sub-band, or one sub-channel may be mapped to a plurality of LBT sub-bands. Different mapping manners correspond to different mapping rules. The mapping rule between sub-channels and interlaced resource block indexes will be introduced below with reference to embodiments for the case where one sub-channel is mapped to one LBT sub-band and for the case where one sub-channel is mapped to a plurality of LBT sub-bands.

For the case where one sub-channel is mapped to one LBT sub-band:

In an implementation, the mapping rule between sub-channels and interlaced resource block indexes is that: starting from a first interlaced resource block index in an LBT sub-band, and in a sequence of serial numbers of interlaced resource block indexes in the LBT sub-band from small to large, one or more interlaced resource blocks are mapped to a sub-channel. That is, in the case where one sub-channel is mapped to one LBT sub-band, when the serial number of the first interlaced resource block index in an LBT sub-band is 0, then starting from the interlaced resource block index with serial number of 0 in the LBT sub-band, and in a sequence of serial numbers of interlaced resource block indexes from small to large, one or more interlaced resource blocks are mapped to a sub-channel.

In a possible implementation, the mapping rule between sub-channels and interlaced resource block indexes is that a sub-channel includes *m1* interlaced resource block indexes, and the sub-channel is mapped to *m1* consecutive interlaced resource block indexes. The number of interlaced resource block indexes included in an LBT sub-band is *m1* times the number of sub-channels included in the LBT sub-band, and *m1* is a positive integer greater than 1 and less than or equal to *M.*

As an example, an LBT sub-band includes *x* sub-channels and *y* interlaced resource block indexes, where x is an integer, and *y* is an integer, and *y=m1*x*, then one sub-channel may include *m1* interlaced resource block indexes, and one sub-channel is mapped to *m1* consecutive interlaced resource block indexes. Optionally, when *m1=M*, one sub-channel may be mapped to all *M* interlaced resource block indexes in the LBT sub-band, that is, one sub-channel includes all M interlaced resource block indexes in the LBT sub-band.

For example, if the subcarrier spacing (SCS) is 15 kHz, an LBT bandwidth is 20 Mhz, the bandwidth of 20 Mhz contains 5 sub-channels, the LBT bandwidth includes 10 interlaced resource block indexes (such as IRB indexes 0-9), and one sub-channel includes 20 resource blocks (RBs), then one sub-channel includes two interlaced resource block indexes, a sub-channel with a serial number of 0 (a first sub-channel in the 5 sub-channels) is mapped to consecutive IRB index 0 (an interlaced resource block index with a serial number of 0) and IRB index 1 (an interlaced resource block index with a serial number of 1), a sub-channel with a serial number of 1 (a second sub-channel in the 5 sub-channels) is mapped to consecutive IRB index 2 (an interlaced resource block index with a serial number of 2) and IRB index 3 (an interlaced resource block index with a serial number of 3), a sub-channel with a serial number of 2 (a third sub-channel in the 5 sub-channels) is mapped to consecutive IRB index 4 (an interlaced resource block index with a serial number of 4) and IRB index 5 (an interlaced resource block index with a serial number of 5), a sub-channel with a serial number of 3 (a fourth sub-channel in the 5 sub-channels) is mapped to consecutive IRB index 6 (an interlaced resource block index with a serial number of 6) and IRB index 7 (an interlaced resource block index with a serial number of 7), and a sub-channel with a serial number of 4 (a fifth sub-channel in the 5 sub-channels) is mapped to consecutive IRB index 8 (an interlaced resource block index with a serial number of 8) and IRB index 9 (an interlaced resource block index with a serial number of 9).

In a possible implementation, the mapping rule between sub-channels and interlaced resource block indexes is that a sub-channel includes *m1* interlaced resource block indexes, and the sub-channel is mapped to *m1* non-consecutive interlaced resource block indexes. The number of interlaced resource block indexes included in an LBT sub-band is *m1* times the number of sub-channels included in the LBT sub-band, and *m1* is a positive integer greater than 1 and less than *M*.

As an example, an LBT sub-band includes *x* sub-channels and y interlaced resource block indexes, where x is an integer, and *y* is an integer, and *y=m1*x*, then a sub-channel includes *m1* interlaced resource block indexes, and the sub-channel is mapped to *m1* non-consecutive interlaced resource block indexes. For example, the sub-channel may be mapped to *m1* interlaced resource block indexes with odd serial numbers; or the sub-channel may be mapped to *m1* interlaced resource block indexes with even serial numbers; or the sub-channel may be mapped to *m1* interlaced resource block indexes, where a difference between serial numbers of adjacent interlaced resource block indexes in the *m1* interlaced resource block indexes is *x1*, *x1* is the number of sub-channels included in the LBT sub-band, and *x1* is an integer less than *M*.

For example, if the subcarrier spacing (SCS) is 15 kHz, an LBT bandwidth is 20 Mhz, the bandwidth of 20 Mhz contains 2 sub-channels, the LBT bandwidth includes 10 interlaced resource block indexes (such as IRB indexes 0-9), and one sub-channel includes 50 resource blocks (RBs), then one sub-channel includes 5 interlaced resource block indexes, for example, sub-channel 0 is mapped to interlaced resource block indexes with even serial numbers {0,2,4,6,8}, and sub-channel 1 is mapped to interlaced resource block indexes with odd serial numbers {1,3,5,7,9}.

In an implementation, the mapping rule between sub-channels and interlaced resource block indexes is that a sub-channel includes *a+1* interlaced resource block indexes, and the sub-channel is mapped to all resource blocks included in *a* consecutive or non-consecutive interlaced resource block indexes and mapped to a part of interlaced resource blocks included in a remaining interlaced resource block index of the *a+1* interlaced resource block indexes. The number of interlaced resource block indexes included in an LBT sub-band is *m2* times the number of sub-channels included in the LBT sub-band, where *m2* is a non-integer greater than 1 and less than *M*, and *a* is a value obtained by rounding down *m2.*

For example, in the case where the number of interlaced resource block indexes included in an LBT sub-band is *m2* times the number of sub-channels included in the LBT sub-band, and *m2* is a non-integer greater than 1 and less than *M,* the granularity of the sub-channel may be that: a sub-channel includes *a+1* interlaced resource block indexes, and the mapping relationship between sub-channels and interlaced resource block indexes may be that the sub-channel is mapped to all resource blocks included in *a* consecutive or non-consecutive interlaced resource block indexes and mapped to a part of interlaced resource blocks included in the remaining interlaced resource block index of the *a+1* interlaced resource block indexes. For example, the part of interlaced resource blocks may be first 5 physical resource blocks included in an interlaced resource block index, or may be last 5 physical resource blocks included in an interlaced resource block index; or the part of interlaced resource blocks may be all 5 physical resource blocks with odd serial numbers included in an interlaced resource block index, or may be all 5 physical resource blocks with even serial numbers included in an interlaced resource block index.

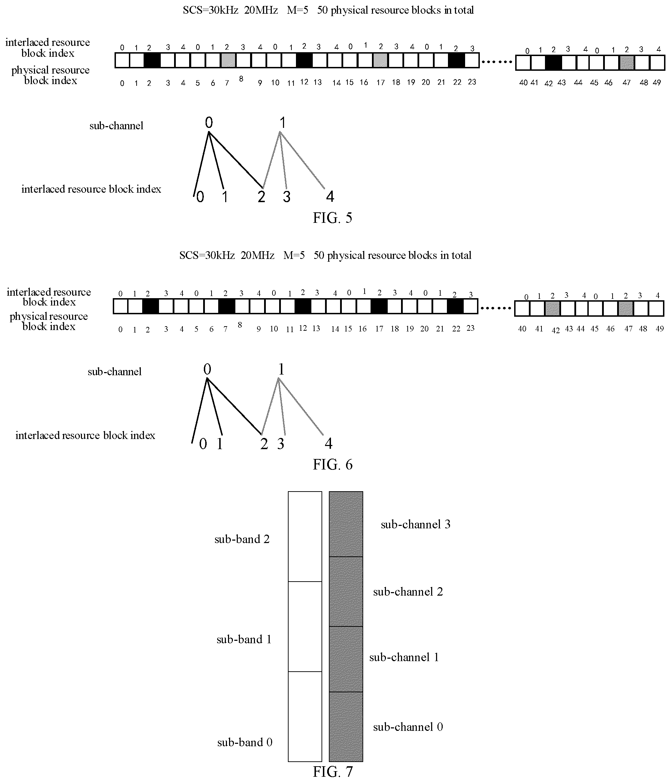

For example, as shown in FIG. 5, an LBT sub-band includes 5 interlaced resource block indexes (that is, serial numbers of the interlaced resource block indexes are {0,1,2,3,4}, respectively), with a total of 50 physical resource blocks (PRBs), and the LBT sub-band includes 2 sub-channels, then one sub-channel includes 3 interlaced resource block indexes. A sub-channel 0 (i.e., a first sub-channel in the 2 sub-channels) is mapped to consecutive interlaced resource block indexes with serial numbers of {0,1}, and the sub-channel 0 is further mapped to 5 physical resource blocks with even serial numbers included in an interlaced resource block index with a serial number of 2, i.e., physical resource blocks (PRBs) with serial numbers of {2,12,22,32,42}. A sub-channel 1 (i.e., a second sub-channel in the 2 sub-channels) is mapped to 5 physical resource blocks with odd serial numbers included in the interlaced resource block index with the serial number of 2, i.e., physical resource blocks (PRBs) with serial numbers of {7,17,27,37,47}, and the sub-channel 1 is further mapped to all physical resource blocks included in interlaced resource block indexes with serial numbers of {3,4}.

As another example, as shown in FIG. 6, an LBT sub-band includes 5 interlaced resource block indexes (that is, serial numbers of the interlaced resource block indexes are {0,1,2,3,4}, respectively), with a total of 50 physical resource blocks (PRBs), and the LBT sub-band includes 2 sub-channels, then one sub-channel includes 3 interlaced resource block indexes. A sub-channel 0 (i.e., a first sub-channel in the 2 sub-channels) is mapped to consecutive interlaced resource block indexes with serial numbers of {0,1}, and the sub-channel 0 is further mapped to a first half of physical resource blocks included in an interlaced resource block index with a serial number of 2, i.e., 5 physical resource blocks (PRBs) with serial numbers of {2,7,12,17,22}. A sub-channel 1 (i.e., a second sub-channel in the 2 sub-channels) is mapped to a second half of the physical resource blocks included in the interlaced resource block index with the serial number of 2, i.e., 5 physical resource blocks (PRBs) with serial numbers of {27,32,37,42,47}, and the sub-channel 1 is further mapped to all physical resource blocks included in interlaced resource block indexes with serial numbers of {3,4}.

In an implementation, the mapping rule between sub-channels and interlaced resource block indexes is that a sub-channel includes *a+1* interlaced resource block indexes, the sub-channel is mapped to all resource blocks included in *a* consecutive or non-consecutive interlaced resource block indexes, and a remaining interlaced resource block index of the *a+1* interlaced resource block indexes is not mapped to the sub-channel. The number of interlaced resource block indexes included in an LBT sub-band is *m2* times the number of sub-channels included in the LBT sub-band, where *m2* is a non-integer greater than 1 and less than *M*, and *a* is a value obtained by rounding down *m2.*

As an example, in a case where an interlaced resource block index in an LBT sub-band cannot form a complete sub-channel, the remaining interlaced resource block index in the LBT sub-band is not mapped to a sub-channel. That is, in the case where an interlaced resource block index in an LBT sub-band cannot form a complete sub-channel, the remaining interlaced resource block index in the LBT sub-band do not establish a mapping relationship with a sub-channel. For example, a sub-channel has a length of 15 physical resource blocks, and an LBT sub-band includes 100 physical resource blocks, then the LBT sub-band may include 6 sub-channels, the 6 sub-channels establish a mapping relationship with interlaced resource block indexes with serial numbers from 0 to 8, and the remaining 10 physical resource blocks do not establish a mapping with an interlaced resource block index with a serial number of 9, that is, the remaining 10 physical resource blocks in the interlaced resource block index with the serial number of 9 are not mapped to a sub-channel.

For the case where one sub-channel is mapped to a plurality of LBT sub-bands:

In an implementation, the mapping rule between sub-channels and interlaced resource block indexes is that remaining interlaced resource blocks in an LBT sub-band that cannot form a complete sub-channel are combined with remaining interlaced resource blocks in other LBT sub-bands to form a complete sub-channel.

That is, in an LBT sub-band, there may exist remaining interlaced resource blocks that cannot form a complete sub-channel, then these remaining interlaced resource blocks may be combined with remaining interlaced resource blocks in other LBT sub-bands to form a complete sub-channel, to support that one sub-channel is mapped to a plurality of LBT sub-bands.

In a possible implementation, as shown in FIG. 7, remaining interlaced resource blocks in an LBT sub-band that cannot form a complete sub-channel may be combined with interlaced resource blocks in an adjacent LBT sub-band to form a complete sub-channel.

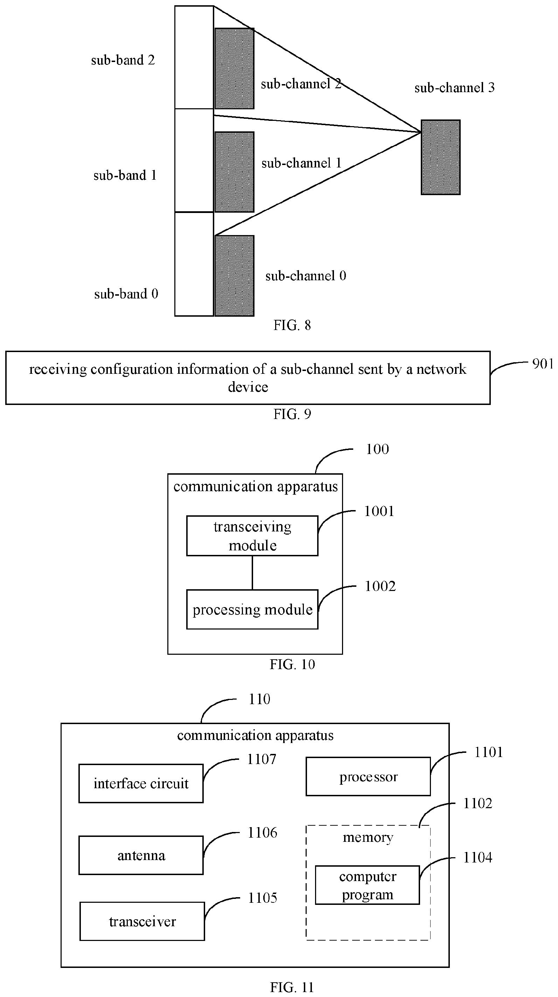

In a possible implementation, as shown in FIG. 8, if each LBT sub-band has remaining interlaced resource blocks that cannot form a complete sub-channel, respective remaining interlaced resource blocks in a plurality of LBT sub-bands are combined to form a complete sub-channel, where each LBT sub-band includes at least one complete sub-channel. For example, assuming that a sub-channel has a length of 75 physical resource blocks, the subcarrier spacing (SCS) is 15 kHz, and an LBT bandwidth of 20 Mhz includes 100 physical resource blocks, a sub-band 0 includes a complete sub-channel 0, a sub-band 1 includes a complete sub-channel 1, a sub-band 2 includes a complete sub-channel 2, and remaining physical resource blocks in the sub-band 0, the sub-band 1 and the sub-band 2 form a complete sub-channel 3.

It should be noted that in some embodiments of the present invention, the sub-channel configuration information obtained by mapping interlaced resource blocks in the system to a plurality of sub-channels needs to be notified by the network device to the terminal device in the system in a certain manner. The configuration information of the sub-channel configured by the network device is public information, and should be known to all available terminal devices, and it may be indicated through system pre-definition, or indicated via a system broadcast message or a high-level signaling, such as a radio resource control message. The network device or terminal device with the authority to send sub-channel configuration information may indicate the adopted sub-channel configuration via a corresponding signaling.

By implementing embodiments of the present invention, by configuring a sub-channel according to the mapping rule between sub-channels and interlaced resource block indexes predefined by the system, the number and positions of interlaced resource block indexes included in the sub-channel may be determined, so that the sub-channel is configured by using the mapping rule, and OCB requirements can be met on the unlicensed frequency band of the terminal sidelink, thereby meeting potential diversified application scenarios and needs in the future.

It can be understood that the above embodiments are implementations which describe the method for configuring resources according to embodiments of the present invention from the side of the network device. Embodiments of the present invention also propose a method for configuring resources, and implementations of the method for configuring resources will be described below from the side of terminal device. Referring to FIG. 9, FIG. 9 is a schematic flowchart of another method for configuring resources according to the present invention. It should be noted that the method for configuring resources in embodiments of the present invention may be applied to an unlicensed frequency band of the terminal sidelink, and may be performed by a terminal device. As shown in FIG. 9, the method for configuring resources may include, but not limited to, a following step.

In step 901, configuration information of a sub-channel sent by a network device is received.

In embodiments of the present invention, the configuration information of the sub-channel indicates the number and positions of interlaced resource block indexes configured for the corresponding sub-channel; and the number of resource blocks between two consecutive interlaced resource blocks included in the same interlaced resource block index is *M*, and *M* is determined by a size of a subcarrier spacing.

It should be noted that the sub-channel configuration information obtained by mapping interlaced resource blocks in the system to a plurality of sub-channels needs to be notified by the network device to the terminal device in the system in a certain manner. Optionally, based on the sub-channel configuration, the network device can indicate the scheduled sub-channel resources to a sending end UE and/or a receiving end UE by indicating the sub-channel index, for carrying control information and/or data information of the UE, and the UE can also select one or more sub-channels from available sub-channel resources for carrying and sending control information and/or data information.

Optionally, in embodiments of the present invention, when the terminal device accesses the network device, the terminal device can receive the configuration information of the sub-channel sent by the network device, and can determine the number and positions of interlaced resource block indexes configured for a sub-channel scheduled by the terminal device according to the configuration information of the sub-channel, the mapping rule between sub-channels and interlaced resource block indexes, and the granularity of the sub-channel. Regarding the mapping rule between sub-channels and interlaced resource block indexes as well as the granularity of the sub-channel, reference may be made to the description on the mapping rule and the granularity of the sub-channel described hereinbefore, which will not be elaborated here.

By implementing embodiments of the present invention, by providing a mapping manner between sub-channels and interlaced resource block indexes, resource configuration for the sub-channels is realized, and OCB requirements can be met on the unlicensed frequency band of the terminal sidelink, thereby meeting potential diversified application scenarios and needs in the future.

In the above embodiments provided in the present invention, the methods according to embodiments of the present invention are introduced from perspectives of the network device and the terminal device respectively. In order to implement the various functions in the methods according to the above embodiments of the present invention, the network device and the terminal device each may include a hardware structure or a software module, and implement the above various functions in a form of the hardware structure, the software module, or the hardware structure in combination with the software module. A certain function among the above mentioned various functions may be implemented in the manner of the hardware structure, the software module, or the hardware structure in combination with the software module.

Referring to FIG. 10, FIG. 10 is a schematic block diagram of a communication apparatus 100 according to embodiments of the present invention. The communication apparatus 100 shown in FIG. 10 may include a transceiving module 1001 and a processing module 1002. The transceiving module 1001 may include a sending module and/or a receiving module, the sending module is configured to implement a sending function, the receiving module is configured to implement a receiving function, and the transceiving module 1001 may implement the sending function and/or the receiving function.

The communication apparatus 100 may be a terminal device, an apparatus in the terminal device, or an apparatus that can be matched with the terminal device. Alternatively, the communication apparatus 100 may be a network device, an apparatus in the network device, or may an apparatus that can be matched with the network device.

In the case where the communication apparatus 100 is the network device, in embodiments of the present invention, the processing module 1002 is configured to determine a size of a resource granularity. The processing module 1002 is further configured to determine configuration information of at least one sub-channel according to the size of the resource granularity and a mapping rule between sub-channels and interlaced resource block indexes. Configuration information of each of the at least one sub-channel indicates the number and positions of interlaced resource block indexes configured for the corresponding sub-channel; and the number of resource blocks between two consecutive interlaced resource blocks included in the same interlaced resource block index is M, and *M* is determined by a size of a subcarrier spacing.

In an embodiment, the processing module 1002 includes: a determining unit and a mapping unit. The determining unit is configured to determine the number of interlaced resource block indexes included in each sub-channel according to the size of the resource granularity. The mapping unit is configured to determine positions of the interlaced resource block indexes mapped for each sub-channel according to the mapping rule between sub-channels and interlaced resource block indexes.

In a possible embodiment, the processing module 1002 is specifically configured to: determine the size of the resource granularity according to the number of interlaced resource block indexes included in a sub-channel; or determine the size of the resource granularity according to the number of sub-channels included in a listen-before-talk (LBT) sub-band.

In a possible embodiment, the mapping unit is specifically configured to: starting from a first interlaced resource block index in an LBT sub-band, and in a sequence of serial numbers of interlaced resource block indexes in the LBT sub-band from small to large, map one or more interlaced resource blocks to a sub-channel.

In a possible embodiment, the mapping unit is specifically configured to: map the sub-channel to *m1* consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than or equal to *M.*

In a possible embodiment, the mapping unit is specifically configured to: map the sub-channel to *m1* non-consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than *M.*

In a possible embodiment, the mapping unit is specifically configured to: map the sub-channel to *m1* interlaced resource block indexes with odd serial numbers; map the sub-channel to *m1* interlaced resource block indexes with even serial numbers; or map the sub-channel b to *m1* interlaced resource block indexes, where a difference between serial numbers of adjacent interlaced resource block indexes in the *m1* interlaced resource block indexes is *x1*, *x1* is the number of sub-channels included in the LBT sub-band, and *x1* is an integer less than *M.*

In a possible embodiment, the sub-channel includes *a+1* interlaced resource block indexes, and the mapping unit is specifically configured to: map the sub-channel to all resource blocks included in *a* consecutive or non-consecutive interlaced resource block indexes and to a part of interlaced resource blocks included in a remaining interlaced resource block index of the *a+1* interlaced resource block indexes. The number of interlaced resource block indexes included in the LBT sub-band is *m2* times the number of sub-channels included in the LBT sub-band, where *m2* is a non-integer greater than 1 and less than *M,* and *a* is a value obtained by rounding down *m2.*

In a possible embodiment, the sub-channel includes *a+1* interlaced resource block indexes, and the mapping unit is specifically configured to: map the sub-channel to all resource blocks included in *a* consecutive or non-consecutive interlaced resource block indexes, and not map a remaining interlaced resource block index of the *a+1* interlaced resource block indexes to the sub-channel. The number of interlaced resource block indexes included in the LBT sub-band is *m2* times the number of sub-channels included in the LBT sub-band, where *m2* is a non-integer greater than 1 and less than *M*, and *a* is a value obtained by rounding down *m2.*

In a possible embodiment, the mapping unit is specifically configured to: combine remaining interlaced resource blocks in the LBT sub-band that cannot form a complete sub-channel with remaining interlaced resource blocks in other LBT sub-bands to form a complete sub-channel.

In a possible embodiment, the mapping unit is specifically configured to: combine the remaining interlaced resource blocks in the LBT sub-band that cannot form a complete sub-channel with interlaced resource blocks in an adjacent LBT sub-band to form a complete sub-channel; or combine respective remaining interlaced resource blocks in a plurality of LBT sub-bands to form a complete sub-channel, where each of the plurality of LBT sub-bands includes at least one complete sub-channel.

In the case where the communication apparatus 100 is the terminal device, in embodiments of the present invention, the transceiving module 1001 is configured to receive configuration information of a sub-channel sent by a network device. The configuration information of the sub-channel indicates the number and positions of interlaced resource block indexes configured for the corresponding sub-channel; and the number of resource blocks between two consecutive interlaced resource blocks included in the same interlaced resource block index is M, and M is determined by a size of a subcarrier spacing.

With respect to the apparatus in the above embodiments, the specific manners of individual modules therein for performing operations have been described in detail in the method embodiments, which will not be elaborated herein.

Referring to FIG. 11, FIG. 11 is a schematic block diagram of another communication apparatus 110 according to embodiments of the present invention. The communication apparatus 110 may be a network device, may also be a terminal device, may also be a chip, a chip system, or a processor that supports the network device to implement the above method, or may also be a chip, a chip system, or a processor that supports the terminal device to implement the above method. The apparatus may be used to implement the methods as described in the above method embodiments, and for details, reference may be made to the descriptions on the above method embodiments.

The communication apparatus 110 may include one or more processors 1101. The processor 1101 may be a general-purpose processor or a special-purpose processor. For example, it may be a baseband processor or a central processing unit. The baseband processor may be configured to process a communication protocol and communication data, and the central processing unit may be configured to control a communication apparatus (such as a base station, a baseband chip, a terminal device, a terminal device chip, a DU or a CU, etc.), execute computer programs, and process data of computer programs.

Optionally, the communication apparatus 110 may further include one or more memories 1102 that may have stored therein a computer program 1104. The processor 1101 executes the computer program 1104 to cause the communication apparatus 110 to implement the methods as described in the above method embodiments. Optionally, the memory 1102 may have stored therein data. The communication apparatus 110 and the memory 1102 may be set separately or integrated together.

Optionally, the communication apparatus 110 may further include a transceiver 1105 and an antenna 1106. The transceiver 1105 may be called a transceiving element, a transceiving machine, a transceiving circuit or the like, for implementing a transceiving function. The transceiver 1105 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication apparatus 110 may further include one or more interface circuits 1007. The interface circuit 1107 is configured to receive a code instruction and transmit the code instruction to the processor 1101. The processor 1101 runs the code instruction to enable the communication apparatus 110 to execute the methods as described in the foregoing method embodiments.

The communication apparatus 110 is the network device: the processor 1101 is configured to execute the steps 201 and 202 in FIG. 2.

The communication apparatus 110 is the terminal device: the transceiver 1105 is configured to execute the step 901 in FIG. 9.

In an implementation, the processor 1101 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the processor 1101 may have stored therein a computer program that, when run on the processor 1101, causes the communication apparatus 110 to implement the method as described in the foregoing method embodiments. The computer program may be solidified in the processor 1101, and in this case, the processor 1101 may be implemented by hardware.

In an implementation, the communication apparatus 110 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The communication apparatus described in the above embodiments may be the network device or the terminal device (such as the first terminal device in the foregoing method embodiments), but the scope of the communication apparatus described in the present invention is not limited thereto, and a structure of the communication apparatus is not limited by FIG. 11. The communication apparatus may be a stand-alone device or may be a part of a larger device. For example, the communication apparatus may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld machine, a mobile unit, a vehicle device, a network device, a cloud device, an artificial intelligence device, etc.;
(6) others.

For the case where the communication apparatus may be a chip or a chip system, the chip may include a processor and an interface. In the chip, one or more processors may be provided, and more than one interface may be provided.

For the case where the chip is used to implement functions of the network device in embodiments of the present invention, the processor is configured to determine a size of a resource granularity. The processor is further configured to determine configuration information of at least one sub-channel according to the size of the resource granularity and a mapping rule between sub-channels and interlaced resource block indexes. Configuration information of each of the at least one sub-channel indicates the number and positions of interlaced resource block indexes configured for the corresponding sub-channel; and the number of resource blocks between two consecutive interlaced resource blocks included in the same interlaced resource block index is *M,* and *M* is determined by a size of a subcarrier spacing.

In an embodiment, the processor includes: a determining unit and a mapping unit. The determining unit is configured to determine the number of interlaced resource block indexes included in each sub-channel according to the size of the resource granularity. The mapping unit is configured to determine positions of the interlaced resource block indexes mapped for each sub-channel according to the mapping rule between sub-channels and interlaced resource block indexes.

In a possible embodiment, the processor is specifically configured to: determine the size of the resource granularity according to the number of interlaced resource block indexes included in a sub-channel; or determine the size of the resource granularity according to the number of sub-channels included in a listen-before-talk (LBT) sub-band.

In a possible embodiment, the mapping unit is specifically configured to: starting from a first interlaced resource block index in an LBT sub-band, and in a sequence of serial numbers of interlaced resource block indexes in the LBT sub-band from small to large, map one or more interlaced resource blocks to a sub-channel.

In a possible embodiment, the mapping unit is specifically configured to: map the sub-channel to *m1* consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than or equal to *M.*

In a possible embodiment, the mapping unit is specifically configured to: map the sub-channel to *m1* non-consecutive interlaced resource block indexes. The sub-channel includes *m1* interlaced resource block indexes, the number of interlaced resource block indexes included in the LBT sub-band is *m1* times the number of sub-channels included in the LBT sub-band, and *m1* is a positive integer greater than 1 and less than M.

In a possible embodiment, the mapping unit is specifically configured to: map the sub-channel to *m1* interlaced resource block indexes with odd serial numbers; map the sub-channel to *m1* interlaced resource block indexes with even serial numbers; or map the sub-channel b to *m1* interlaced resource block indexes, where a difference between serial numbers of adjacent interlaced resource block indexes in the *m1* interlaced resource block indexes is *x1*, *x1* is the number of sub-channels included in the LBT sub-band, and *x1* is an integer less than *M.*

In a possible embodiment, the sub-channel includes *a+1* interlaced resource block indexes, and the mapping unit is specifically configured to: map the sub-channel to all resource blocks included in *a* consecutive or non-consecutive interlaced resource block indexes and to a part of interlaced resource blocks included in a remaining interlaced resource block index of the *a+1* interlaced resource block indexes. The number of interlaced resource block indexes included in the LBT sub-band is *m2* times the number of sub-channels included in the LBT sub-band, where *m2* is a non-integer greater than 1 and less than *M,* and *a* is a value obtained by rounding down *m2.*

In a possible embodiment, the sub-channel includes *a+1* interlaced resource block indexes, and the mapping unit is specifically configured to: map the sub-channel to all resource blocks included in *a* consecutive or non-consecutive interlaced resource block indexes, and not map a remaining interlaced resource block index of the *a+1* interlaced resource block indexes to the sub-channel. The number of interlaced resource block indexes included in the LBT sub-band is *m2* times the number of sub-channels included in the LBT sub-band, where *m2* is a non-integer greater than 1 and less than *M*, and *a* is a value obtained by rounding down *m2.*

In a possible embodiment, the mapping unit is specifically configured to: combine remaining interlaced resource blocks in the LBT sub-band that cannot form a complete sub-channel with remaining interlaced resource blocks in other LBT sub-bands to form a complete sub-channel.

In a possible embodiment, the mapping unit is specifically configured to: combine the remaining interlaced resource blocks in the LBT sub-band that cannot form a complete sub-channel with interlaced resource blocks in an adjacent LBT sub-band to form a complete sub-channel; or combine respective remaining interlaced resource blocks in a plurality of LBT sub-bands to form a complete sub-channel, where each of the plurality of LBT sub-bands includes at least one complete sub-channel.

For the case where the chip is used to implement functions of the terminal device in embodiments of the present invention: the interface is configured to receive configuration information of a sub-channel sent by a network device. The configuration information of the sub-channel indicates the number and positions of interlaced resource block indexes configured for the corresponding sub-channel; and the number of resource blocks between two consecutive interlaced resource blocks included in the same interlaced resource block index is *M*, and *M* is determined by a size of a subcarrier spacing.

Optionally, the chip further includes a memory for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

Embodiments of the present invention also provide a system for configuring resources. The system includes the communication apparatus as the terminal device and the communication apparatus as the network device as described in the aforementioned embodiments in FIG. 10, or the system includes the communication apparatus as the terminal device and the communication apparatus as the network device as described in the aforementioned embodiments in FIG. 11.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for configuring resources, performed by a network device, comprising:
determining a size of a resource granularity; and
determining configuration information of at least one sub-channel according to the size of the resource granularity and a mapping rule between sub-channels and interlaced resource block indexes;
wherein configuration information of each of the at least one sub-channel indicates the number and positions of interlaced resource block indexes configured for the corresponding sub-channel; and the number of resource blocks between two consecutive interlaced resource blocks comprised in the same interlaced resource block index is *M*, and *M* is determined by a size of a subcarrier spacing.

2. The method according to claim 1, wherein determining the configuration information of the at least one sub-channel according to the size of the resource granularity and the mapping rule between sub-channels and interlaced resource block indexes comprises:
determining the number of interlaced resource block indexes comprised in each sub-channel according to the size of the resource granularity; and
determining positions of the interlaced resource block indexes mapped for each sub-channel according to the mapping rule between sub-channels and interlaced resource block indexes.

3. The method according to claim 1 or 2, wherein determining the size of the resource granularity comprises:
determining the size of the resource granularity according to the number of interlaced resource block indexes comprised in a sub-channel; or
determining the size of the resource granularity according to the number of sub-channels comprised in a listen-before-talk (LBT) sub-band.

4. The method according to any one of claims 1 to 3, wherein the mapping rule between sub-channels and interlaced resource block indexes is that starting from a first interlaced resource block index in an LBT sub-band, and in a sequence of serial numbers of interlaced resource block indexes in the LBT sub-band from small to large, one or more interlaced resource blocks are mapped to a sub-channel.

5. The method according to claim 4, wherein the mapping rule between sub-channels and interlaced resource block indexes is that the sub-channel comprises *m1* interlaced resource block indexes, and the sub-channel is mapped to *m1* consecutive interlaced resource block indexes;
wherein the number of interlaced resource block indexes comprised in the LBT sub-band is *m1* times the number of sub-channels comprised in the LBT sub-band, and *m1* is a positive integer greater than 1 and less than or equal to *M.*

6. The method according to claim 4, wherein the mapping rule between sub-channels and interlaced resource block indexes is that the sub-channel comprises *m1* interlaced resource block indexes, and the sub-channel is mapped to *m1* non-consecutive interlaced resource block indexes;
wherein the number of interlaced resource block indexes comprised in the LBT sub-band is *m1* times the number of sub-channels comprised in the LBT sub-band, and *m1* is a positive integer greater than 1 and less than *M.*

7. The method according to claim 6, wherein the sub-channel being mapped to *m1* non-consecutive interlaced resource block indexes comprises:
the sub-channel being mapped to *m1* interlaced resource block indexes with odd serial numbers;
the sub-channel being mapped to *m1* interlaced resource block indexes with even serial numbers; or
the sub-channel being mapped to *m1* interlaced resource block indexes, wherein a difference between serial numbers of adjacent interlaced resource block indexes in the *m1* interlaced resource block indexes is *x1*, where *x1* is the number of sub-channels comprised in the LBT sub-band, and *x1* is an integer less than *M.*

8. The method according to claim 4, wherein the mapping rule between sub-channels and interlaced resource block indexes is that the sub-channel comprises *a+1* interlaced resource block indexes, and the sub-channel is mapped to all resource blocks comprised in *a* consecutive or non-consecutive interlaced resource block indexes and mapped to a part of interlaced resource blocks comprised in a remaining interlaced resource block index of the *a+1* interlaced resource block indexes;
wherein the number of interlaced resource block indexes comprised in the LBT sub-band is *m2* times the number of sub-channels comprised in the LBT sub-band, where *m2* is a non-integer greater than 1 and less than *M*, and *a* is a value obtained by rounding down *m2.*

9. The method according to claim 4, wherein the mapping rule between sub-channels and interlaced resource block indexes is that the sub-channel comprises *a+1* interlaced resource block indexes, the sub-channel is mapped to all resource blocks comprised in *a* consecutive or non-consecutive interlaced resource block indexes, and a remaining interlaced resource block index of the *a+1* interlaced resource block indexes is not mapped to the sub-channel;
wherein the number of interlaced resource block indexes comprised in the LBT sub-band is *m2* times the number of sub-channels comprised in the LBT sub-band, where *m2* is a non-integer greater than 1 and less than *M*, and *a* is a value obtained by rounding down *m2.*

10. The method according to claim 4, wherein the mapping rule between sub-channels and interlaced resource block indexes is that remaining interlaced resource blocks in the LBT sub-band that cannot form a complete sub-channel are combined with remaining interlaced resource blocks in other LBT sub-bands to form a complete sub-channel.

11. The method according to claim 10, wherein the remaining interlaced resource blocks in the LBT sub-band that cannot form a complete sub-channel being combined with the remaining interlaced resource blocks in other LBT sub-bands to form a complete sub-channel comprises:
the remaining interlaced resource blocks in the LBT sub-band that cannot form a complete sub-channel being combined with interlaced resource blocks in an adjacent LBT sub-band to form a complete sub-channel; or
respective remaining interlaced resource blocks in a plurality of LBT sub-bands being combined to form a complete sub-channel, wherein each of the plurality of LBT sub-bands comprises at least one complete sub-channel.

12. A method for configuring resources, performed by a terminal device, comprising:
receiving configuration information of a sub-channel sent by a network device;
wherein the configuration information of the sub-channel indicates the number and positions of interlaced resource block indexes configured for the corresponding sub-channel; and the number of resource blocks between two consecutive interlaced resource blocks comprised in the same interlaced resource block index is M, and M is determined by a size of a subcarrier spacing.

13. A communication apparatus, comprising: a processing module configured to:
determine a size of a resource granularity; and
determine configuration information of at least one sub-channel according to the size of the resource granularity and a mapping rule between sub-channels and interlaced resource block indexes;
wherein configuration information of each of the at least one sub-channel indicates the number and positions of interlaced resource block indexes configured for the corresponding sub-channel; and the number of resource blocks between two consecutive interlaced resource blocks comprised in the same interlaced resource block index is M, and M is determined by a size of a subcarrier spacing.

14. The communication apparatus according to claim 13, wherein the processing module comprises:
a determining unit, configured to determine the number of interlaced resource block indexes comprised in each sub-channel according to the size of the resource granularity; and
a mapping unit, configured to determine positions of the interlaced resource block indexes mapped for each sub-channel according to the mapping rule between sub-channels and interlaced resource block indexes.

15. The communication apparatus according to claim 13 or 14, wherein the processing module is specifically configured to:
determine the size of the resource granularity according to the number of interlaced resource block indexes comprised in a sub-channel; or
determine the size of the resource granularity according to the number of sub-channels comprised in a listen-before-talk (LBT) sub-band.

16. The communication apparatus according to any one of claims 13 to 15, wherein the mapping unit is specifically configured to:
starting from a first interlaced resource block index in an LBT sub-band, and in a sequence of serial numbers of interlaced resource block indexes in the LBT sub-band from small to large, map one or more interlaced resource blocks to a sub-channel.

17. The communication apparatus according to claim 16, wherein the mapping unit is specifically configured to:
map the sub-channel to *m1* consecutive interlaced resource block indexes;
wherein the sub-channel comprises *m1* interlaced resource block indexes, the number of interlaced resource block indexes comprised in the LBT sub-band is *m1* times the number of sub-channels comprised in the LBT sub-band, and *m1* is a positive integer greater than 1 and less than or equal to *M*.

18. The communication apparatus according to claim 16, wherein the mapping unit is specifically configured to:
map the sub-channel to *m1* non-consecutive interlaced resource block indexes;
wherein the sub-channel comprises *m1* interlaced resource block indexes, the number of interlaced resource block indexes comprised in the LBT sub-band is *m1* times the number of sub-channels comprised in the LBT sub-band, and *m1* is a positive integer greater than 1 and less than *M*.

19. The communication apparatus according to claim 18, wherein the mapping unit is specifically configured to:
map the sub-channel to *m1* interlaced resource block indexes with odd serial numbers;
map the sub-channel to *m1* interlaced resource block indexes with even serial numbers; or
map the sub-channel b to *m1* interlaced resource block indexes, wherein a difference between serial numbers of adjacent interlaced resource block indexes in the *m1* interlaced resource block indexes is *x1*, where *x1* is the number of sub-channels comprised in the LBT sub-band, and *x1* is an integer less than *M*.

20. The communication apparatus according to claim 16, wherein the sub-channel comprises *a+1* interlaced resource block indexes,
wherein the mapping unit is specifically configured to:
map the sub-channel to all resource blocks comprised in *a* consecutive or non-consecutive interlaced resource block indexes and to a part of interlaced resource blocks comprised in a remaining interlaced resource block index of the *a+1* interlaced resource block indexes;
wherein the number of interlaced resource block indexes comprised in the LBT sub-band is *m2* times the number of sub-channels comprised in the LBT sub-band, where *m2* is a non-integer greater than 1 and less than *M*, and *a* is a value obtained by rounding down *m2.*

21. The communication apparatus according to claim 16, wherein the sub-channel comprises *a+1* interlaced resource block indexes,
wherein the mapping unit is specifically configured to:
map the sub-channel to all resource blocks comprised in *a* consecutive or non-consecutive interlaced resource block indexes, and
not map a remaining interlaced resource block index of the *a+1* interlaced resource block indexes to the sub-channel;
wherein the number of interlaced resource block indexes comprised in the LBT sub-band is *m2* times the number of sub-channels comprised in the LBT sub-band, where *m2* is a non-integer greater than 1 and less than *M*, and *a* is a value obtained by rounding down *m2.*

22. The communication apparatus according to claim 16, wherein the mapping unit is specifically configured to:
combine remaining interlaced resource blocks in the LBT sub-band that cannot form a complete sub-channel with remaining interlaced resource blocks in other LBT sub-bands to form a complete sub-channel.

23. The communication apparatus according to claim 22, wherein the mapping unit is specifically configured to:
combine the remaining interlaced resource blocks in the LBT sub-band that cannot form a complete sub-channel with interlaced resource blocks in an adjacent LBT sub-band to form a complete sub-channel; or
combine respective remaining interlaced resource blocks in a plurality of LBT sub-bands to form a complete sub-channel, wherein each of the plurality of LBT sub-bands comprises at least one complete sub-channel.

24. A communication apparatus, comprising:
a transceiving module, configured to receive configuration information of a sub-channel sent by a network device;
wherein the configuration information of the sub-channel indicates the number and positions of interlaced resource block indexes configured for the corresponding sub-channel; and the number of resource blocks between two consecutive interlaced resource blocks comprised in the same interlaced resource block index is *M,* and *M* is determined by a size of a subcarrier spacing.

25. A communication apparatus, comprising:
a processor; and
a memory, having stored therein computer programs,
wherein the processor is configured to execute the computer programs stored in the memory to cause the apparatus to perform the method according to any one of claims 1 to 11.

26. A communication apparatus, comprising:
a processor; and
a memory, having stored therein computer programs,
wherein the processor is configured to execute the computer programs stored in the memory to cause the apparatus to perform the method according to claim 12.

27. A computer-readable storage medium, having stored therein instructions that, when executed, cause the method according to any one of claims 1 to 11 to be performed.

28. A computer-readable storage medium, having stored therein instructions that, when executed, cause the method according to claim 12 to be performed.
